# DEMANDE DE BREVET EUROPEEN

(11) **EP 0 841 793 A1**
(43) Date de publication de la demande: **13.05.1998**
(21) Numéro de dépôt: 97203434.2
(22) Date de dépôt: 05.11.1997
(51) Int. Cl.: H04M 1/02

(54) **Appareil téléphonique portatif comportant un microphone à glissière**

(30) Priorité: 12.11.1996 FR 9613756
(71) Demandeur: Philips Electronics N.V., 5621 BA Eindhoven (NL)
(72) Inventeur: Alix, Philippe, 75008 Paris (FR); Bradford, Simon, 75008 Paris (FR); Girardin, Benoit, 75008 Paris (FR)
(74) Mandataire: Chaffraix, Jean

(57) **Abrégé**

Cet appareil téléphonique comporte un bâti (1) dans lequel est ménagé un logement, un microphone (12), un écouteur (10), une partie à glissière (15) sur laquelle est disposé le microphone (12) et susceptible de prendre au moins deux positions : en A une position dépliée et en B une position repliée pour se glisser dans ledit logement.

Il est prévu en outre un système de cliquet à bascule pour maintenir la partie à glissière dans ses deux positions en effectuant un seul mouvement de poussée de ladite partie.

Application : appareils de radiomobile de petite taille.

## Description

L'invention concerne un appareil téléphonique comportant :
- un bâti dans lequel est ménagé un logement,
- un premier transducteur pour transformer des ondes sonores en variations de grandeurs électriques,
- un deuxième transducteur pour transformer des variations de grandeurs électriques en ondes sonores,
- une partie à glissière sur laquelle est disposé un desdits transducteurs, susceptible de prendre au moins deux positions : une position repliée pour se glisser dans ledit logement et une position dépliée pour en sortir.

Les appareils téléphoniques deviennent de taille de plus en plus petite de sorte que le premier transducteur (le microphone) s'éloigne de la bouche du locuteur lorsque celui-ci porte à son oreille le deuxième transducteur (l'écouteur) lorsqu'il est incorporé dans le corps de l'appareil. Il faut donc prévoir des mesures pour rallonger cette distance microphone, écouteur.

Un appareil de ce type est connu du document de brevet européen n° EP 0 414 365. Dans cet appareil connu, la partie à glissière est mise en position repliée en contrecarrant la tension exercée par un ressort jusqu'à le raccrocher et en position dépliée en relâchant celui-ci par décrochage. Pour libérer le ressort, on appuie sur un bouton de relâchement de sorte que pour déplier la partie à glissière, on est obligé de trouver ce bouton de relâchement, d'appuyer dessus. Pour replier cette partie, on appuie sur la partie à glissière comme déjà dit. Pour manoeuvrer cet appareil connu, on est obligé effectuer plusieurs sortes de mouvements de la main.

Ceci est considéré comme désavantageux.

La présente invention propose un appareil du genre mentionné dans le préambule qui ne présente pas l' inconvénient de l'appareil connu.

Pour cela un tel appareil est remarquable en ce qu'il comporte en outre :
- un système de cliquet à bascule pour maintenir la partie à glissière dans ses deux positions en effectuant un seul mouvement de poussée.

Ainsi, l'utilisateur en appuyant, par exemple sur une table, l'extrémité de la partie de glissière peut la replier ou la déplier en effectuant toujours le même mouvement d'une seule main.

Une caractéristique importante de l'invention consiste à prévoir qu'un contacteur de prise de ligne téléphonique soit couplé avec ladite partie à glissière. Ceci amène l'avantage que la prise d'appel et la fin d'appel se trouvent facilitées. Il n'y a plus de manoeuvres supplémentaires à effectuer hormis celle de replier ou de déplier la partie de glissière.

La description suivante, faite en regard des dessins ci-annexés, le tout donné à titre d'exemple non limitatif fera bien comprendre comment l'invention peut être réalisée.
La figure 1 montre les positions dépliée et repliée d'un appareil conforme à l'invention.
La figure 2 montre en vue éclatée et partielle la partie de glissière et son logement ménagé dans l'appareil de la figure 1.
La figure 3 montre plus en détail une partie du système de cliquet.
La figure 4 montre l'implantation d'un contacteur de ligne.
La figure 5 montre une vue en coupe du contacteur de ligne montré à la figure 4.
La figure 6 montre une vue en coupe d'un autre contacteur de ligne.

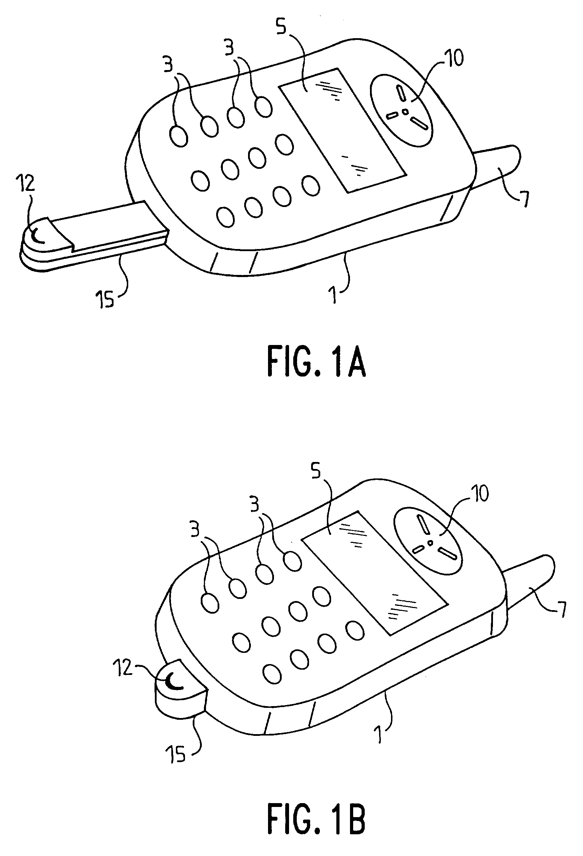

A la figure 1, l'appareil est constitué à partir d'un bâti 1 sur lequel sont disposés, notamment, un clavier 3, un écran 5 et une antenne 7. Le bâti reçoit aussi l'écouteur 10. Le microphone 12 est disposé, lui, sur une partie à glissière 15 qui est montrée en A en position dépliée et en B en position repliée. Sans sortir du cadre de l'invention, l'écouteur 10 pourrait être disposé sur une partie à glissière et le microphone 12 sur le bâti 1. Il est possible aussi, toujours sans sortir du cadre de l'invention, de placer microphone 12 et écouteur 10, chacun sur une partie à glissière.

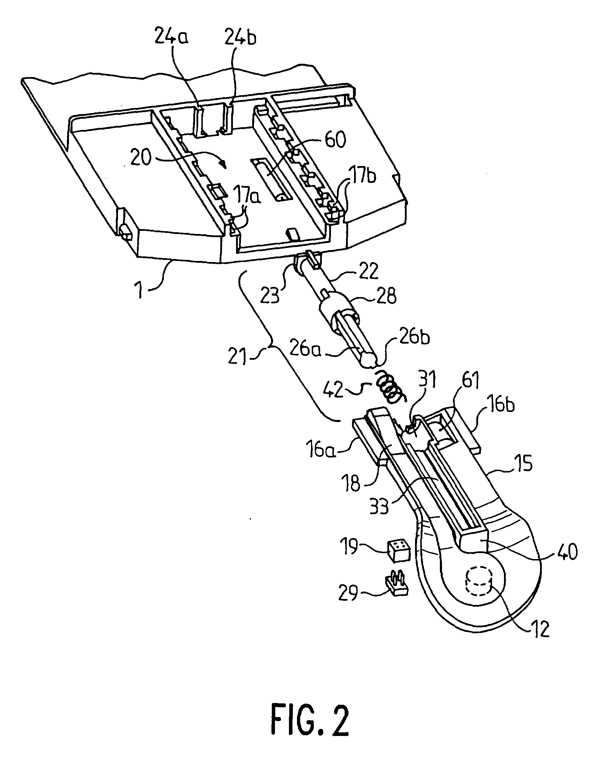

A la figure 2 qui est une vue éclatée, la référence 20 montre le logement dans lequel la partie à glissière 15 vient se loger lorsqu'elle est en position repliée. Ce glissement est facilité par la forme de rail donnée aux bords 16a et 16b qui se déplacent à l'intérieur de guides crantés 17a et 17b. Le microphone est relié au montage électronique, non représenté sur la figure, par un câble plat ou un circuit imprimé souple 18 ("flexfoil") sur lequel est connectée une prise de raccordement 19. Cette prise vient se glisser sur une prise 29 faisant partie du montage électronique de l'appareil.

Conformément à l'invention, il est prévu un système à cliquet 21 qui permet de passer de la position dépliée à la position repliée et réciproquement.

Ce système, connu en soi, est formé d'un axe de glissement 22 muni d'une attache 23 qui vient s'emboîter dans des rainures de fixations 24a et 24b. Ainsi cet axe est solidaire du bâti 1. Cet axe 22 porte deux nervures de guidage 26a et 26b sur une partie de sa longueur. Une autre partie est lisse sur une distance suffisante pour permettre la rotation d'une bague 28. Cette bague vient se loger dans une cavité 31 ménagée dans la partie de glissière de sorte que les mouvements longitudinaux de cette bague 28 sont solidaires de ceux de la partie de glissière 15. Cette cavité débouche sur un conduit 33 qui épouse l'axe 22 pour assurer librement le déplacement longitudinal de la partie 15 et qui présente un fond 40. Un ressort 42 porte, d'une part, sur une extrémité de l'axe 22 et, d'autre part, sur le fond 40 du conduit 33. Le ressort exerce donc une poussée qui tend à mettre la partie de glissière 15 en position dépliée.

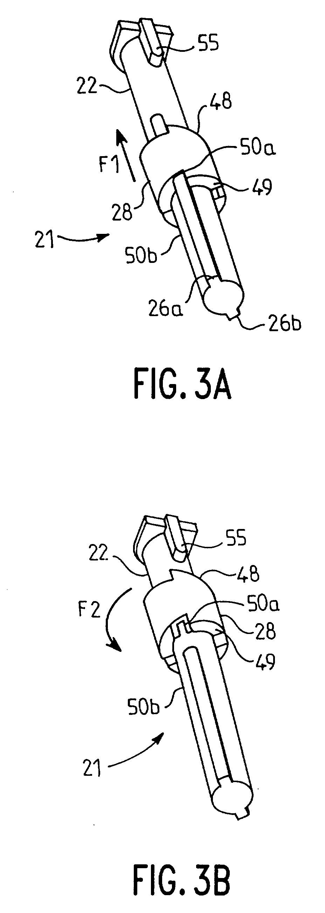

La figure 3 montre en détail le système à cliquet 21. En A sur cette figure 3, la bague 28 est montrée dans la même position que sur la figure précédente. Cette bague présente à ses deux extrémités 48 et 49 un profil de came en dents de scie. Dans cette position, les nervures 26a et 26b pénêtrent respectivement dans des ouvertures 50a et 50b ménagées dans cette bague longitudinalement à l'axe (seule l'ouverture 50a est visible sur la figure 3) de sorte qu'un déplacement longitudinal de la bague 28 le long de l'axe 22 est possible, comme l'indique la flèche F1. Du fait que la bague 28 est placée dans la cavité 31, ce déplacement se produit lorsqu'on pousse la partie à glissière en direction du bâti 1. Si on prolonge ce mouvement longitudinal de la bague 28 selon la flèche F1, la bague 28 se libère des nervures 26a et 26b, comme cela est représenté en B sur la figure 3 et peut pivoter autour de l'axe 22, comme l'indique la flèche F2, de sorte que lorsqu'une dent 55 disposée à une extrémité de l'axe 22 rencontre le profil de came de l'extrémité 48, la bague tourne d'un certain angle. Ainsi, lorsque le mouvement longitudinal s'inverse les nervures 26a et 26b butent contre la face de cette bague, la partie à glissière 15 est repliée. Si on effectue une autre poussée, la bague 28 tourne d'un angle qui, à l'aide du profil de came de l'extrémité 49 permet aux ouvertures 50a de coïncider avec les nervures 26a et 26b. Alors, la partie à glissière 15 peut se déplier.

Conformément à un deuxième aspect de l'invention, le déplacement de la partie à glissière 15 entraîne la prise de ligne. Ceci s'obtient en ouvrant et/ou en fermant un contacteur de prise de ligne 60, montré sur la figure 2. Ce contacteur est une ampoule de relais "reed" qui se ferme et/ou s'ouvre lorsqu'un aimant 61, inséré dans la partie à glissière, s'approche de lui.

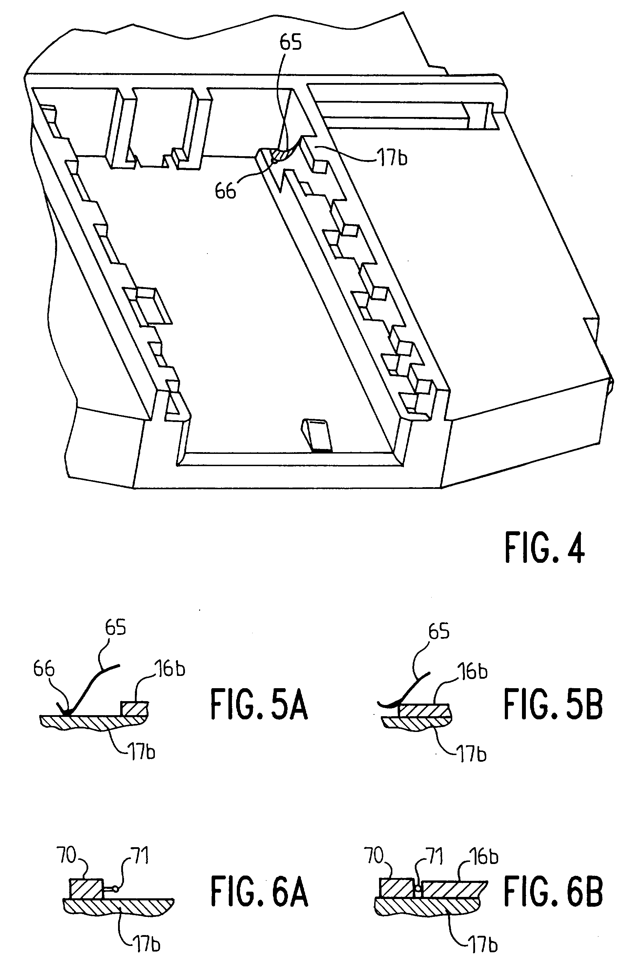

Une autre façon de réaliser ce contacteur de ligne, montrée à la figure 4, est d'utiliser une lame à ressort de contact 65 qui ferme le contact lorsque la partie à glissière est en position dépliée et qui l'ouvre lorsque la partie à glissière est en position repliée. La lame 65 est fixée à la partie supérieur du guide 17b et le contact s'effectue au niveau de la partie inférieure.

La figure 5 explicite le fonctionnement en A, lorsque le contact est formé et en B, lorsque le rail de guidage pousse la lame 65 de sorte qu'il n'y a plus contact.

La figure 6 montre encore une autre façon de réaliser ce contacteur de ligne. Elle consiste à placer un dispositif interrupteur 70 en fin de course de la partie à glissière de sorte que l'extrémité du rail 16b, constituant une butée appuie sur la tige de commande de contact 71 du dispositif 70.

Ledit contacteur de ligne est formé selon une autre façon par un système à effet Hall qui se présente d'une manière similaire à celle du relais reed.

D'autres moyens pour réaliser différentes parties de l'appareil restent du domaine de l'invention, par exemple la liaison du microphone au montage électronique peut se faire par des parties conductrices (obtenues par des dépôts métalliques) placées sur les rails de guidage 16a et 16b et coopérant avec un ou plusieurs crans des guides 17a et 17b métallisés aussi.

## Revendications

1. Appareil téléphonique comportant :
- un bâti dans lequel est ménagé un logement,
- un premier transducteur pour transformer des ondes sonores en variations de grandeurs électriques,
- un deuxième transducteur pour transformer des variations de grandeurs électriques en ondes sonores,
- une partie à glissière sur laquelle est disposé un desdits transducteurs, susceptible de prendre au moins deux positions : une position repliée pour se glisser dans ledit logement et une position dépliée pour en sortir,
caractérisé en ce qu'il comporte en outre :
- un système de cliquet à bascule pour maintenir la partie à glissière dans ses deux positions en effectuant un seul mouvement de poussée.

2. Appareil téléphonique selon la revendication 1, caractérisé en ce qu'un contacteur de prise de ligne téléphonique est couplé avec ladite partie à glissière.

3. Appareil téléphonique selon la revendication 2, caractérisé en ce que ledit contacteur de ligne est formé par des lames à ressort.

4. Appareil téléphonique selon la revendication 2, caractérisé en ce que ledit contacteur de ligne est formé par un dispositif interrupteur muni d'une tige de commande alors que ladite glissière comporte une butée qui vient en contact avec ladite tige pour manoeuvrer ledit interrupteur.

5. Appareil téléphonique selon la revendication 2, caractérisé en ce que ledit contacteur de ligne est formé par un système à effet Hall.

6. Appareil téléphonique selon la revendication 2, caractérisé en ce que ledit contacteur de ligne est formé par un système à relais "reed".

7. Appareil téléphonique selon l'une des revendications 1 à 6, caractérisé en ce que la liaison reliant le transducteur disposé sur la partie à glissière au bâti est formée par un circuit imprimé souple.

8. Appareil téléphonique selon l'une des revendications 1 à 6, caractérisé en ce que la liaison reliant le transducteur disposé sur la partie à glissière au bâti est formée par des pistes ménagées sur la glissière.
